# EUROPÄISCHE PATENTSCHRIFT

(11) **EP 4 193 512 B1**
(45) Veröffentlichungstag und Bekanntmachung des Hinweises auf die Patenterteilung: **03.09.2025**
(21) Anmeldenummer: 22733527.0
(22) Anmeldetag: 25.05.2022
(51) Int. Cl.: H04L 1/00, G06N 20/00, H04W 12/06

(54) **VERFAHREN ZUR KOMMUNIKATION WENIGSTENS EINES MOBILFUNKGERÄTS MIT EINER MOBILFUNKNETZWERKBASISSTATION UND FAHRZEUG**
METHOD FOR COMMUNICATING BETWEEN AT LEAST ONE MOBILE RADIO AND A MOBILE RADIO NETWORK BASE STATION, AND VEHICLE
PROCÉDÉ DE COMMUNICATION ENTRE AU MOINS UNE RADIO MOBILE ET UNE STATION DE BASE DU RÉSEAU DE RADIO MOBILE, ET VÉHICULE

(30) Priorität: 15.06.2021 DE 102021003076
(43) Veröffentlichungstag der Anmeldung: 14.06.2023
(73) Patentinhaber: Mercedes-Benz Group AG, 70372 Stuttgart (DE)
(72) Erfinder: AYDIN, Osman, 70771 Leinfelden-Echterdingen (DE)
(74) Vertreter: Novagraaf Group
(86) Internationale Anmeldenummer: PCT/EP2022/064321
(87) Internationale Veröffentlichungsnummer: WO 2022/263140

(56) Entgegenhaltungen:
- WO-A1-2017/082801
- WO-A1-2018/063485

## Beschreibung

Die Erfindung betrifft ein Verfahren zur Kommunikation wenigstens eines Mobilfunkgeräts mit einer Mobilfunknetzwerkbasisstation nach der im Oberbegriff von Anspruch 1 näher definierten Art sowie ein Fahrzeug mit wenigstens einem Mobilfunkgerät.

Bei dem 3rd Generation Partnership Project (3GPP) handelt es sich um eine weltweite Kooperation von Standardisierungsgremien zur Standardisierung im Mobilfunk. Das 3GPP erstellt technische Spezifikationen, die alle Aspekte der Mobilfunktechnik so präzise beschreiben, dass Mobilfunkgeräte verschiedenster Hersteller in allen Mobilfunknetzen weltweit fehlerfrei funktionieren. Bei den hierdurch definierten Mobilfunkstandards handelt es sich beispielsweise um GSM, UMTS, oder LTE. Die Mobilfunkstandards werden auch als 2G, 3G und 4G bezeichnet. Mit fortschreitender Entwicklung ist auch das Übertragen vergleichsweise hoher Datenmengen möglich, beispielsweise über den aktuell eingeführten Mobilfunkstandard 5G. Mit fortschreitender Forschung und der Einführung zukünftiger Technologien wie 6G, 7G oder folgender Mobilfunkstandards ist auch noch mit einer weiteren Zunahme der über Mobilfunk übermittelten Datenrate zu rechnen.

Die Übermittlung von Daten erfordert dabei das Vorliegen einer ausreichenden Funksignalstärke. Nimmt eine Entfernung eines Mobilfunkgeräts zu einer Sendestation zu, so schwächt sich dieses Mobilfunksignal zunehmenden ab, bis das Mobilfunksignal zu schwach ist, um hohe Datenströme zu übermitteln. Befinden sich Hindernisse wie beispielsweise Hochhäuser, Brücken, Hügel oder Bäume sowie Störquellen, beispielsweise Quellen von elektromagnetischer Strahlung wie Transformatoren im Bereich zwischen Mobilfunkgerät und Basisstation, so kann das Mobilfunksignal zusätzlich beeinträchtigt werden.

Zur Sicherstellung einer erfolgreichen Kommunikation zwischen Mobilfunkgerät und Basisstation bei einem vergleichsweise schwachen Mobilfunksignal, hat die 3GPP die sogenannte Abdeckungsverbesserung, auch als Coverage Enhancement bezeichnet, eingeführt. Mittels Coverage Enhancement ist es möglich, im Vergleich niedrige Datenraten bei einem vergleichsweise schwachen Mobilfunksignal sicher und zuverlässig über vergleichsweise große geografische Reichweiten austauschen zu können. Die Datenübertragung erfolgt dabei mit einer vergleichsweise geringen Sendeleistung, wodurch wenig Strom verbraucht wird. Zur Durchführung von Coverage Enhancement muss eine entsprechende Basisstation und ein jeweiliges Mobilfunkgerät spezielle Sende- und Empfangshardware aufweisen. Coverage Enhancement kann beispielsweise über LTE-M, LTE-MTC beziehungsweise LTE-Cut-M oder auch durch neuere Standards wie LPWAN oder NB-IoT realisiert werden.

Die Erhöhte Reichweite unter Anwendung von Coverage Enhancement basiert auf der mehrmaligen Übertragung der selben Daten. Je schwächer ein Mobilfunksignal zwischen Mobilfunkgerät und Basisstation, desto mehr Wiederholungen sind notwendig, um eine erfolgreiche Datenübertragung zwischen den beiden Kommunikationsteilnehmern zu gewährleisten. Das erneute Übertragen derselben Daten nimmt zur Verfügung stehende Bandbreite in Anspruch, was ein Grund für die nur vergleichsweise gering übertragbare Datenrate ist. Coverage Enhancement eignet sich daher nur für Anwendungen, bei denen vergleichsweise wenig Daten, bzw. eine geringe Datenrate auch bei einer schlechten Empfangssituation zuverlässig übertragen werden muss.

Solche Anwendungsfälle finden sich in der Automobilbranche. So werden mit zunehmender Digitalisierung auch Fahrzeuge zunehmend vernetzt, welche dann dazu in der Lage sind, über eine Fahrzeug-zu-Fahrzeug-Schnittstelle Daten mit anderen Fahrzeugen auszutauschen, über eine Fahrzeug-zu-Infrastruktur-Schnittstelle Daten mit Infrastruktur, wie beispielsweise eine Mautstation, auszutauschen oder über eine Fahrzeug-zu-Netzwerk-Schnittstelle Informationen über Mobilfunk zu übermitteln. Fährt ein solches kommunikationsfähiges Fahrzeug auf einer Fahrtroute in ein Funkloch hinein, so können über einen üblichen Mobilfunkstandard wie LTE oder 5G gegebenenfalls keine Informationen übertragen werden, da die Empfangsqualität zu schlecht ist. Mit Hilfe von Coverage Enhancement lässt sich eine erfolgreiche Kommunikation zwischen Mobilfunkgerät und Mobilfunknetzwerkbasisstation jedoch für größere Distanzen sicherstellen.

Aufgrund der reduzierten Datenrate können jedoch nur ausgewählte Informationen übertragen werden. Für eine Kommunikation unter Anwendung von Coverage Enhancement kommen aufgrund ihrer Relevanz beispielsweise folgende Informationen in Frage: Fahrzeugstatusupdates, ein Entriegelungs- oder Verriegelungsbefehl zum Öffnen oder Verschließen von Fahrzeugtüren, und/oder Fahrzeugdiagnosedaten.

Aus der WO 2018/213166 A1 ist ein Verfahren zur Überwachung einer Funksignalqualität bei der Verwendung von Coverage Enhancement bekannt. Mit Hilfe des in der Druckschrift beschriebenen Verfahrens wird ein Coverage Enhancement Level so verändert, dass eine zur Durchführung von Coverage Enhancement erforderliche Datenrate optimal an einer aktuell vorliegenden Empfangssignalstärke angepasst wird. Entfernt sich ein Mobilfunkgerät zu einer Mobilfunknetzwerkbasisstation, so wird ein hohes Coverage Enhancement Level gewählt, was mit einer hohen Wiederholrate eines zu übermittelnden Mobilfunksignals einhergeht. Nähert sich das Mobilfunkgerät der Mobilfunknetzwerkbasisstation hingegen an, so wird ein vergleichsweise niedriges Coverage Enhancement Level gewählt, was mit einer niedrigeren Datenwiederholrate verbunden ist. Hierdurch können Netzwerkkommunikationsressourcen eingespart und damit optimal genutzt werden.

Aus der WO 2020/229274 A1 ist zudem ein Verfahren zum Ändern einer Verbindungskonfiguration zwischen einem Endgerät und einem Mobilfunknetzwerk bekannt. Dabei ermittelt eine Entität des Mobilfunknetzwerks einen Bedarf zum Ändern der Verbindungskonfiguration zwischen Endgerät zum Mobilfunknetzwerk und überträgt eine Aufforderung zum Ändern einer Verbindungseinstellung an das Endgerät, welcher das Endgerät folgt, um die Verbindungskonfiguration zum Mobilfunknetzwerk anzupassen. Eine angepasste Verbindungskonfiguration kann dabei das Übertragen von Informationen mittels Coverage Enhancement vorsehen. Bei dem Endgerät kann es sich um eine Telekommunikationseinheit eines Fahrzeugs handeln.

Aus der WO 2018/063485 A1 ist ferner ein System und ein korrespondierendes Verfahren zum Zuordnen von Systemressourcen unter Nutzung von Radio Link Monitoring bekannt. Das System umfasst zumindest einen Netzknoten und ein damit kommunizierendes Endgerät. Der Netzknoten verschickt Datenpakete wiederholt an das Endgerät, wobei das Endgerät prüft wie viele Wiederholungen erforderlich sind, um eine den Datenpaketen zugrunde liegende Information erfolgreich auslesen zu können. Diese Wiederholungsanzahl wird vom Endgerät an den Netzknoten rückübermittelt, welcher die Wiederholungsanzahl mit einem Schwellwert vergleicht. In Abhängigkeit, ob die Wiederholungsanzahl über oder unter dem Schwellwert liegt, wird die Anzahl durchgeführter Wiederholungen zur Übertragung von Datenpaketen vom Netzknoten erhöht oder reduziert. Das Erhöhen oder Absenken der Wiederholungsanzahl kann dabei auf dem Anpassen eines Coverage Enhancement Levels erfolgen.

Ferner offenbart die WO 2017/082801 A1 Verfahren zur adaptiven Konfiguration von Nachbarzellen, um einen Betrieb von Nutzergeräten mit einer verbesserten Abdeckung zu ermöglichen. Dabei wird ein im Nutzergerät aktiver Grad eines verwendeten Abdeckungsverbesserungsmodus ermittelt und in Abhängigkeit dessen die Anzahl an Wiederholungen eines zwischen dem Nutzergerät und einem mit dem Nutzergerät kommunizierenden Ziel-Netzwerkknoten auszutauschenden Signals im Ziel-Netzwerkknoten eingestellt.

Der vorliegenden Erfindung liegt die Aufgabe zugrunde, ein verbessertes Verfahren zur Kommunikation wenigstens eines Mobilfunkgeräts mit einer Mobilfunknetzwerkbasisstation anzugeben, bei dem eine effiziente und energieoptimierte Kommunikation der Kommunikationsteilnehmer ermöglicht wird.

Erfindungsgemäß wird diese Aufgabe durch ein Verfahren zur Kommunikation wenigstens eines Mobilfunkgeräts mit einer Mobilfunknetzwerkbasisstation mit den Merkmalen des Anspruchs 1, sowie ein Fahrzeug mit wenigstens einem Mobilfunkgerät mit den Merkmalen des Anspruchs 6 gelöst. Vorteilhafte Ausgestaltungen und Weiterbildungen ergeben sich aus den hiervon abhängigen Ansprüchen.

Weitere vorteilhafte Ausgestaltungen des erfindungsgemäßen Verfahrens und des Fahrzeugs ergeben sich auch aus den Ausführungsbeispielen, welche nachfolgend unter Bezugnahme auf die Figuren näher beschrieben werden.

Dabei zeigen:
- Fig. 1: eine schematische Draufsicht auf ein Fahrzeug auf dessen Route ein unterschiedlich starkes Mobilfunksignal vorliegt; und
- Fig. 2: ein Ablaufdiagramm eines erfindungsgemäßen Verfahrens.

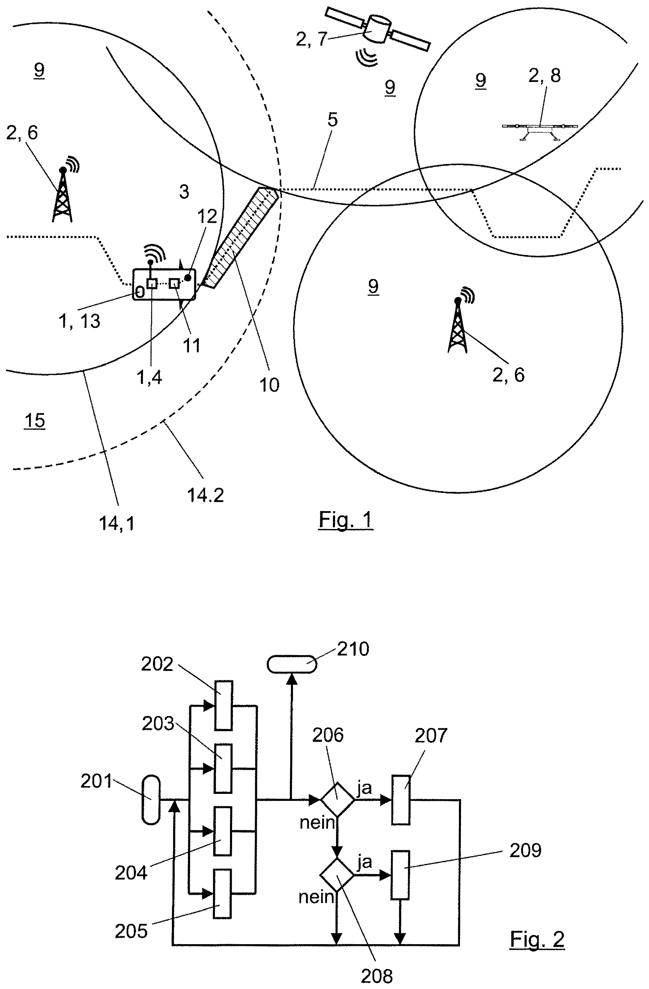

Figur 1 zeigt eine Draufsicht auf ein Fahrzeug 3, welches auf einer Route 5 durch ein Sendegebiet 9 verschiedener Mobilfunknetzwerkbasisstationen 2 fährt. Bei einer Mobilfunknetzwerkbasisstation 2 kann es sich beispielsweise um eine terrestrische Bodenstation 6, einen Satelliten 7 und/oder eine Drohne 8 handeln. Dabei können sich von den verschiedenen Mobilfunknetzwerkbasisstationen 2 erzeugte Sendegebiete 9 bereichsweise oder auch vollständig überschneiden. Auf einem Teilabschnitt der vom Fahrzeug 3 befahrenen Route 5 befindet sich ein in Figur 1 durch eine schraffierte Fläche hervorgehobenes Funkloch 10, an dem ein Mobilfunksignal so schwach ist, dass eine Kommunikation mit den Mobilfunknetzwerkbasisstationen 2 über bewährte Mobilfunkstandards wie 2 bis 5G oder auch zukünftige Mobilfunkstandards wie 6G oder dergleichen nicht möglich ist. Anstelle oder zusätzlich von Mobilfunk kann in einem Sendegebiet 9 auch eine andere Funktechnologie zur Datenübertragung verwendet werden, wie beispielsweise Rundfunk oder WIFI.

Das Fahrzeug 3 umfasst wenigstens eine Fahrzeug-Telekommunikationseinheit 4, wenigstens eine Recheneinheit 11 sowie wenigstens einen Sensor 12 zur Durchführung einer Fahrzeugdiagnose. Mit dem Sensor 12 erzeugte Sensordaten werden auf der Recheneinheit 11 verarbeitet und über die Fahrzeug-Telekommunikationseinheit 4 per Mobilfunk an einer Mobilfunknetzwerkbasisstation 2 übertragen. Die an eine Mobilfunknetzwerkbasisstation 2 übertragenen Daten können dann beispielsweise über das Internet an einen Fahrzeughersteller weitergegeben werden, damit der Fahrzeughersteller die Daten auswertet oder auf eine sonstige Art und Weise weiterverarbeitet. Generell kann das Fahrzeug 3 auch mehrere Fahrzeug-Telekommunikationseinheiten 4 beziehungsweise andere Mobilfunkgeräte 1, beispielsweise in Form eines mobilen Endgeräts 13 wie ein Smartphone, aufweisen.

Nähert sich das Fahrzeug 3 einer ersten Reichweite 14.1 einer Mobilfunknetzwerkbasisstation 2, so ist eine Datenübertragung eines Mobilfunkgeräts 1 mittels üblicher Mobilfunkstandards nicht mehr möglich, da hinter der ersten Reichweite 14.1 ein zur Datenübertragung verwendetes Mobilfunksignal zu schwach ist. Erfordert das Fahrzeug 3, beziehungsweise die Recheneinheit 11 und/oder das Mobilfunkgerät 1 trotzdem das Übermitteln relevanter Daten, so liegt eine Bedarfssituation vor, in der das Mobilfunkgerät 1 erfindungsgemäß in einen Abdeckungsverbesserungs-Modus schaltet, in dem Daten unter Verwendung von Coverage Enhancement mit einer Mobilfunknetzwerkbasisstation 2 ausgetauscht werden. Hierzu weist eine Mobilfunknetzwerkbasisstation 2 eine zweite Reichweite 14.2 auf, bis zu der eine Datenübertragung unter Verwendung von Coverage Enhancement noch möglich ist. In dem Beispiel in Figur 1 ist lediglich für eine in Figur 1 links dargestellte terrestrische Bodenstation 6 eine solche zweite Reichweite 14.2 eingezeichnet. Jedoch weisen auch die anderen Mobilfunknetzwerkbasisstationen 2 eine solche zweite Reichweite 14.2 auf.

Betritt das Fahrzeug 3 das von Satelliten 7 bediente Sendegebiet 9, so liegt keine Bedarfssituation zur Durchführung einer auf Coverage Enhancement basierten Kommunikation mehr vor. In diesem Falle liegt eine Normalsituation vor, in der das Mobilfunkgerät 1 in einen Normalbetriebsmodus wechselt, in dem die Kommunikation wieder unter Einsatz eines bewährten Mobilfunkstandards erfolgt. Eine Kommunikation unter Anwendung von Coverage Enhancement wird dann deaktiviert. Hierdurch lässt sich ein Stromverbrauch des Mobilfunkgeräts 1 und damit des Fahrzeugs 3 senken.

Durch das Aktivieren von Coverage Enhancement lediglich in der Bedarfssituation können Ressourcen in Form von Energie und Kommunikationsbandbreite somit eingespart werden. Hierdurch ist ein besonders effizienter Betrieb des Fahrzeugs 3 möglich.

Figur 2 zeigt ein Ablaufdiagramm eines erfindungsgemäßen Verfahrens. In einem Verfahrensschritt 201 startet das Fahrzeug 3 und fährt in Richtung eines Zielorts. In einem Verfahrensschritt 202 erfolgt eine Überwachung einer Stärke eines Mobilfunksignals zwischen einem vom Fahrzeug 3 umfassten Mobilfunkgerät 1 und einer Mobilfunknetzwerkbasisstation 2, welche mit dem vom Fahrzeug 3 umfassten Mobilfunkgerät 1 kommuniziert.

Im Verfahrensschritt 203 überprüft das Fahrzeug 3, beziehungsweise die Recheneinheit 11 und/oder das Mobilfunkgerät 1, ob ein Bedarfsindikator vorliegt, der in einem optionalen nicht dargestellten Verfahrensschritt vom Mobilfunkgerät 1 empfangen worden sein kann.

Im Verfahrensschritt 204 erfolgt eine Analyse der vom Fahrzeug 3 geplanten Route 5, wobei eine Netzabdeckung auf der Route 5 auf das Vorliegen etwaiger Funklöcher 10 untersucht wird. Ist während des Befahrens eines solchen Funklochs 10 das Übertragen relevanter Daten erforderlich, so liegt eine Bedarfssituation vor.

Im Verfahrensschritt 205 gibt das Fahrzeug 3 einen Notruf über einen bewährten Mobilfunkstandard ab, welcher jedoch nicht aufgrund einer unzureichenden Signalstärke des Mobilfunksignals nicht von einer Mobilfunknetzwerkbasisstation 2 empfangen werden konnte. Alle oder auch einige der Verfahrensschritte 202 bis 205 können hintereinander und/oder, wie dargestellt, gleichzeitig durchgeführt werden. Dabei können auch einzelne der genannten Verfahrensschritte optional sein und somit entfallen.

Im Verfahrensschritt 206 überprüft das Mobilfunkgerät 1 beziehungsweise die Recheneinheit 11 ob eine Bedarfssituation vorliegt. Dies bedeutet, dass die Signalstärke des Mobilfunksignals über einen festgelegten Zeitraum hinweg einen festgelegten Mindestwert unterschreitet, ein Bedarfsindikator vom Mobilfunkgerät 1 empfangen wurde, auf der Route 5 ein Funkloch 10 vorliegt, beziehungsweise ein für den Normalbetriebsmodus unzureichendes Mobilfunksignal zur Verfügung steht, und/oder ob das Absetzen eines Notrufs im Normalbetriebsmodus erfolglos blieb.

Ist dies der Fall, wird im Verfahrensschritt 207 der Abdeckungsverbesserungs-Modus zur Datenübertragung unter Verwendung von Coverage Enhancement aktiviert. Ist dies hingegen nicht der Fall, wird im Verfahrensschritt 208 überprüft, ob eine Kommunikation zwischen Mobilfunkgerät 1 und Mobilfunknetzwerkbasisstation 2 über einen bewährten Mobilfunkstandard besteht oder wieder möglich ist. Ist dies der Fall, wird im Verfahrensschritt 209 der Abdeckungsverbesserungs-Modus beendet und das Mobilfunkgerät 1 schaltet zurück in den Normalbetriebsmodus. Im Verfahrensschritt 210 ist das Verfahren beendet. Dies kann beispielsweise beim Erreichen eines Fahrtziels des Fahrzeugs 3 der Fall sein. Es ist jedoch auch möglich, dass erfindungsgemäße Verfahren bei einem abgestellten Fahrzeug weiterlaufen zu lassen. Wird das Fahrzeug 3 beispielsweise in einem Funkloch 10 geparkt, kann hierdurch eine Kommunikation beispielsweise mit einem Fahrzeughersteller aufrechterhalten werden.

## Patentansprüche

1. Verfahren zur Kommunikation wenigstens eines Mobilfunkgeräts (1) mit einer Mobilfunknetzwerkbasisstation (2), wobei zumindest eine Teilmenge von zwischen dem Mobilfunkgerät (1) und der Mobilfunknetzwerkbasisstation (2) ausgetauschter Informationen unter Einsatz von Abdeckungsverbesserung, basierend auf mehrmaligen Übertragen der selben Daten, kommuniziert wird.
wobei das Mobilfunkgerät (1) bei Vorliegen einer Bedarfssituation einen Abdeckungsverbesserungs-Modus aktiviert, in welchem das Mobilfunkgerät (1) mit der Mobilfunknetzwerkbasisstation (2) Informationen unter Einsatz von Abdeckungsverbesserung austauscht und in einer von der Bedarfssituation abweichenden Normalsituation in einen Normalbetriebsmodus schaltet und im Normalbetriebsmodus den Abdeckungsverbesserungs-Modus beendet, und wobei dem Mobilfunkgerät (1) mitgeteilt wird, dass die Bedarfssituation gegeben ist, wenn das Mobilfunkgerät (1) einen über Mobilfunk versendeten Bedarfsindikator empfängt,
**dadurch gekennzeichnet, dass**
das Mobilfunkgerät (1) selbstständig feststellt, dass die Bedarfssituation gegeben ist, wenn:
- eine Stärke eines Mobilfunksignals zwischen Mobilfunkgerät (1) und Mobilfunknetzwerkbasisstation (2) über eine festgelegte Zeitspanne hinweg einen festgelegten Mindestwert unterschreitet;
- eine Analyse einer von einem das Mobilfunkgerät (1) umfassenden Fahrzeugs (3) geplanten Route (5) ergibt, dass auf der Route (5) ein Funkloch (10) vorliegt; und/oder
- das Absetzen eines Notrufs durch das Mobilfunkgerät (1) im Normalbetriebsmodus nicht möglich ist;
und wobei
das Mobilfunkgerät (1) bei einer mitgeteilten Bedarfssituation nur dann nach Empfangen des Bedarfsindikators den Abdeckungsverbesserungs-Modus aktiviert, wenn der Initiator des Bedarfsindikators zur Aktivierung des Abdeckungsverbesserungs-Modus autorisiert ist.

2. Verfahren nach Anspruch 1,
**dadurch gekennzeichnet, dass**
das Ausgeben des Bedarfsindikators von einem Hersteller des Mobilfunkgeräts (1), einem Hersteller einer das Mobilfunkgerät (1) umfassenden Vorrichtung und/oder von einem Mobilfunknetzwerkbetreiber initiiert wird.

3. Verfahren nach Anspruch 1 oder 2,
**dadurch gekennzeichnet, dass**
auf einer die Kommunikation des Mobilfunkgeräts (1) mit der Mobilfunknetzwerkbasisstation (2) überwachenden Recheneinheit künstliche Intelligenz ausgeführt wird, die künstliche Intelligenz die zwischen dem Mobilfunkgerät (1) und der Mobilfunknetzwerkbasisstation (2) stattfindenden Kommunikation überwacht und die künstliche Intelligenz eine Situation erkennt, die das Ausgeben des Bedarfsindikators erfordert, wenn die künstliche Intelligenz in der überwachten Kommunikation charakteristische Muster erkennt.

4. Verfahren nach einem der Ansprüche 1 bis 3,
**dadurch gekennzeichnet, dass**
im Mobilfunkgerät (1) eine Kennung des Initiators hinterlegt wird, um diesen als zur Aktivierung des Abdeckungsverbesserungs-Modus autorisiert zu klassifizieren.

5. Verfahren nach einem der Ansprüche 1 bis 4,
**dadurch gekennzeichnet, dass**
der Bedarfsindikator über satelliten- oder drohnenbasierte Telekommunikation übertragen wird.

6. Fahrzeug (3) mit wenigstens einem Mobilfunkgerät (1),
**dadurch gekennzeichnet, dass**
das Mobilfunkgerät (1) dazu eingerichtet ist ein Verfahren nach einem der Ansprüche 1 bis 5 auszuführen.

7. Fahrzeug (3) nach Anspruch 6,
**dadurch gekennzeichnet, dass**
das Mobilfunkgerät (1) als Fahrzeug-Telekommunikationseinheit (4) ausgeführt ist.

8. Fahrzeug (3) nach Anspruch 6 oder 7,
**dadurch gekennzeichnet, dass**
das Mobilfunkgerät (1) dazu eingerichtet ist den Abdeckungsverbesserungs-Modus zu aktivieren oder zu beenden:
- während der Fahrt;
- während des Stillstands;
- bei verriegelten Fahrzeugtüren; und/oder
- aus einem Stand-by-Modus heraus.

## Claims

1. Method for communication between at least one mobile radio device (1) and a mobile radio network base station (2), at least a subset of information exchanged between the mobile radio device (1) and the mobile radio network base station (2) being communicated using coverage improvement based on multiple transmissions of the same data
the mobile radio device (1) activating a coverage improvement mode when a demand situation exists, in which mode the mobile radio device (1) exchanges information with the mobile radio network base station (2) using coverage improvement and switches to a normal operating mode in a normal situation deviating from the demand situation and ends the coverage improvement mode in the normal operating mode, and the mobile radio device (1) being informed that the demand situation exists when the mobile radio device (1) receives a demand indicator sent via mobile radio,
**characterized in that**
the mobile radio device (1) independently determines that the demand situation exists if:
- a strength of a mobile radio signal between the mobile radio device (1) and the mobile radio network base station (2) falls below a specified minimum value over a specified period of time;
- an analysis of a route (5) planned by a vehicle (3) comprising the mobile radio device (1) shows that there is a dead spot (10) on the route (5); and/or
- it is not possible to make an emergency call using the mobile radio device (1) in the normal operating mode;
and
the mobile radio device (1) activating the coverage improvement mode in the event of a notified demand situation only after receiving the demand indicator if the initiator of the demand indicator is authorized to activate the coverage improvement mode.

2. Method according to claim 1,
**characterized in that**
the output of the demand indicator is initiated by a manufacturer of the mobile radio device (1), a manufacturer of an apparatus comprising the mobile radio device (1) and/or by a mobile radio network operator.

3. Method according to either claim 1 or claim 2,
**characterized in that**
artificial intelligence is carried out on a computing unit that monitors the communication between the mobile radio device (1) and the mobile radio network base station (2), the artificial intelligence monitors the communication taking place between the mobile radio device (1) and the mobile radio network base station (2), and the artificial intelligence recognizes a situation that requires the output of the demand indicator when the artificial intelligence recognizes characteristic patterns in the monitored communication.

4. Method according to any of claims 1 to 3,
**characterized in that**
an identifier of the initiator is stored in the mobile radio device (1) in order to classify the initiator as authorized to activate the coverage improvement mode.

5. Method according to any of claims 1 to 4,
**characterized in that**
the demand indicator is transmitted via satellite- or drone-based telecommunication.

6. Vehicle (3) comprising at least one mobile radio device (1),
**characterized in that**
the mobile radio device (1) is configured to carry out a method according to any of claims 1 to 5.

7. Vehicle (3) according to claim 6,
**characterized in that**
the mobile radio device (1) is designed as a vehicle telecommunications unit (4).

8. Vehicle (3) according to either claim 6 or claim 7,
**characterized in that**
the mobile radio device (1) is configured to activate or deactivate the coverage improvement mode:
- while driving;
- while stationary;
- with the vehicle doors locked; and/or
- from a standby mode.

## Revendications

1. Procédé de communication d'au moins un appareil de radiocommunication mobile (1) avec une station de base de réseau de radiocommunication mobile (2), dans lequel au moins une quantité partielle d'informations échangées entre l'appareil de radiocommunication mobile (1) et la station de base de réseau de radiocommunication mobile (2) est communiquée en utilisant l'amélioration de la couverture, sur la base d'une transmission répétée des mêmes données,
dans lequel l'appareil de radiocommunication mobile (1) active, en présence d'une situation de besoin, un mode d'amélioration de la couverture dans lequel l'appareil de radiocommunication mobile (1) échange des informations avec la station de base de réseau de radiocommunication mobile (2) en utilisant l'amélioration de la couverture et, dans une situation normale s'écartant de la situation de besoin, commute dans un mode de fonctionnement normal et, dans le mode de fonctionnement normal, met fin au mode d'amélioration de la couverture, et dans lequel l'appareil de radiocommunication mobile (1) est informé que la situation de besoin est donnée lorsque l'appareil de radiocommunication mobile (1) reçoit un indicateur de besoin envoyé par radiotéléphonie mobile,
**caractérisé en ce que**
l'appareil de radiocommunication mobile (1) constate de manière autonome que la situation de besoin est donnée, lorsque :
- une intensité d'un signal de radiocommunication mobile entre l'appareil de radiocommunication mobile (1) et la station de base de réseau de radiocommunication mobile (2) est inférieure à une valeur minimale déterminée pendant une durée déterminée ;
- une analyse d'un itinéraire (5) planifié par un véhicule (3) comprenant l'appareil de radiocommunication mobile (1) révèle qu'il existe un trou radioélectrique (10) sur l'itinéraire (5) ; et/ou
- l'émission d'un appel d'urgence par l'appareil de radiocommunication mobile (1) n'est pas possible en mode de fonctionnement normal ;
et dans lequel
l'appareil de radiocommunication mobile (1), dans une situation de besoin communiquée, n'active le mode d'amélioration de la couverture après réception de l'indicateur de besoin que si l'initiateur de l'indicateur de besoin est autorisé à activer le mode d'amélioration de la couverture.

2. Procédé selon la revendication 1,
**caractérisé en ce que**
l'émission de l'indicateur de besoin est déclenchée par un fabricant de l'appareil de radiocommunication mobile (1), un fabricant d'un dispositif comprenant l'appareil de radiocommunication mobile (1) et/ou par un opérateur de réseau de radiocommunication mobile.

3. Procédé selon la revendication 1 ou 2,
**caractérisé en ce que**
une intelligence artificielle est exécutée sur une unité de calcul surveillant la communication de l'appareil de radiocommunication mobile (1) avec la station de base de réseau de radiocommunication mobile (2), l'intelligence artificielle surveille la communication ayant lieu entre l'appareil de radiocommunication mobile (1) et la station de base de réseau de radiocommunication mobile (2) et l'intelligence artificielle reconnaît une situation qui nécessite l'émission de l'indicateur de besoin lorsque l'intelligence artificielle reconnaît des modèles caractéristiques dans la communication surveillée.

4. Procédé selon l'une des revendications 1 à 3,
**caractérisé en ce que**
un identifiant de l'initiateur est enregistré dans l'appareil de radiocommunication mobile (1) afin de le classer comme étant autorisé à activer le mode d'amélioration de la couverture.

5. Procédé selon l'une des revendications 1 à 4,
**caractérisé en ce que**
l'indicateur de besoin est transmis par télécommunication par satellite ou par drone.

6. Véhicule (3) comportant au moins un appareil de radiocommunication mobile (1),
**caractérisé en ce que**
l'appareil de radiocommunication mobile (1) est conçu pour mettre en œuvre un procédé selon l'une des revendications 1 à 5.

7. Véhicule (3) selon la revendication 6,
**caractérisé en ce que**
l'appareil de radiocommunication mobile (1) est réalisé sous forme d'unité de télécommunication de véhicule (4).

8. Véhicule (3) selon la revendication 6 ou 7,
**caractérisé en ce que**
l'appareil de radiocommunication mobile (1) est conçu pour activer ou désactiver le mode d'amélioration de la couverture :
- pendant la conduite ;
- pendant l'arrêt ;
- lorsque les portes du véhicule sont verrouillées ; et/ou
- à partir d'un mode veille.
